Europäisches Patentamt

European Patent Office

Office européen des brevets

(19)

(11) Veröffentlichungsnummer: **0 134 463**
**B1**

(12) **EUROPÄISCHE PATENTSCHRIFT**

(45) Veröffentlichungstag der Patentschrift: **12.09.90**

(21) Anmeldenummer: **84107611.0**

(22) Anmeldetag: **30.06.84**

(51) Int. Cl.$^5$: **C 08 J 5/18,** C 08 J 7/06,
B 41 M 1/30, C 08 L 67/02

(54) Folie aus thermoplastischem Polyester mit einer Salze organischer Säuren enthaltenden Grundierschicht.

(30) Priorität: **11.07.83 US 512254**

(43) Veröffentlichungstag der Anmeldung:
**20.03.85 Patentblatt 85/12**

(45) Bekanntmachung des Hinweises auf die
Patenterteilung:
**12.09.90 Patentblatt 90/37**

(84) Benannte Vertragsstaaten:
**DE FR GB LU NL**

(56) Entgegenhaltungen:
EP-A-0 013 556
DE-A-1 690 025
US-A-2 627 088
US-A-3 326 837
US-A-3 419 421

(73) Patentinhaber: HOECHST CELANESE
CORPORATION
Route 202-206 North
Somerville, N.J. 08876 (US)

(72) Erfinder: Scott, Caines R.
108 Ashmore Road
Greer South Carolina 29651 (US)

(74) Vertreter: Euler, Kurt Emil, Dr.
HOECHST AG - Werk KALLE Patentabteilung
Postfach 3540 Rheingaustrasse 190
D-6200 Wiesbaden (DE)

EP 0 134 463 B1

Courier Press, Leamington Spa, England.

**Beschreibung**

Folie aus thermoplastischem Polyester mit einer Salze organischer Säuren enthaltenden Grundierschicht.

Die Erfindung bezieht sich auf eine orientierte, selbsttragende Folie aus thermoplastischem Polyester, die auf mindestens einer Seite eine durchgehende Grundierungsschicht trägt.

Orientierte Folie aus Polyester insbesondere biaxial orientierte Folie aus Polyethylenterephthalat, wird in großem Umfang als Verpackungs- und Etikettierungsmaterial für verschiedenartige Produkte, u.a. auch für Lebensmittel, verwendet.

Da Oberflächen von Folien aus Polyester meist hydrophob sind, lassen sie sich nicht leicht beschichten oder be drucken. Für viele Verpackungs- und Etikettierungszwecke sollte die Folie jedoch für normale Flexodruck-und/oder Tiefdruckfarben aufnahmefähig sein.

Man hat versucht, diesem Mangel abzuhelfen, indem man Spezialfarben entwickelt hat, die unmittelbar auf der Oberfläche von Folien haften. Viele dieser Farben haben allerdings Rezepturen auf der Basis von organischen Lösemitteln, harzartigen Bindemitteln und anderen Bestandteilen, die teuer und schwierig zu verarbeiten sind und bei deren Einsatz im Herstellungswerk Gefahren entstehen können.

Eine weitere Möglichkeit zur Verbesserung der Bedruckbarkeit von Polyesterfolien besteht darin, daß man eine Grundierschicht aufbringt, die sowohl auf der Folie haftet als auch Druckfarben annimmt. Solche Grundierschichten bestehen z.B. aus Polymermassen auf Basis von Vinylidenchlorid-Terpolymerisaten, wie sie in US-A-2 698 240 beschrieben sind, oder aus den aus US-A-4 252 885 bekannten, in Wasser dispergierbaren Copolyestergrundierungen. Beim Aufbringen von Grundierschichten zur Verbesserung der Druckfarbenhaftung auf Folien ergibt sich jedoch das Problem, daß die Folien in vielen Fällen als Verpackungsmaterial für Lebensmittel eingesetzt werden, wobei die relative Toxizität der Grundierschicht eine Rolle spielt. Die Folien selbst werden zwar von den meisten Behörden, u.a. auch vom US-Gesundheitsamt (U.S. Food and Drug Administration), als Verpackungsmaterial für Lebensmittel zugelassen, doch bei mit bestimmten polymeren Grundierschichten wie z.B. Acrylharzderivaten, Polymeren mit einem Gehalt an Vinylidenchlorid und zahlreichen ähnlichen Grundierungsmitteln versehenen Folien ergeben sich Probleme bezüglich der Toxizität, da solche Grundierungsmittel möglicherweise in die Lebensmittel diffundieren könnten, mit denen sie in Berührung kommen.

Es ist bekannt, wäßrige Dispersionen von harzartigen Stoffen mit geringen Mengen an Natriumalkylsulfaten zu versetzen und diese Dispersionen dann als Grundierschichten auf biaxial orientierte Polyesterfolien aufzutragen. Die Sulfate dienen als Emulgatoren oder Netzmittel für die z.B. in US-A-2 627 088 beschriebenen Verwendungszwecke. Verschiedene organische oder anorganische Salze werden bekanntlich als Gleitmittel bei der Herstellung von Polyolefinfolien verwendet, wie sie in US-A-2 627 088 beschrieben sind, und aus US-A-4 225 644 ist ferner bekannt, Polypropylenfolie mit bestimmten Fettsäureamiden zu beschichten, um sie blockierungsfrei und gleitfähig zu machen. GB-PS 1 000 019 beschreibt ein Verfahren zur Verbesserung der Gleitfähigkeit von biaxial orientierter Polyesterfolie durch Beschichten der Folie mit einer wäßrigen Lösung aus Natriumsilikat, amorphem $SiO_2$ und einem Tensid. In US-A-3 715 421 wird vorgeschlagen, bestimmte Salze von Fettsäuren als Gleitmittel für Polyesterfilamente zu verwenden. Gemäß US-A-3 393 081 wird ein dünner Film aus gesättigter Fettsäure und/oder Fettalkohol auf eine biaxial orientierte Polystyrolfolie aufgebracht, damit die Folie auf diese Weise heißsiegelfähig wird.

Keine dieser Vorveröffentlichungen befaßt sich jedoch mit dem Problem der Verbesserung der Bedruckbarkeit von Polyesterfolie bzw. mit der Lösung dieses Problems durch die hier beschriebene Verfahrensweise.

Aufgabe der vorliegenden Erfindung ist es deshalb, eine orientierte, selbsttragende Folie aus thermoplastischem Polyester mit verbesserter Aufnahmefähigkeit für Flexo- oder Tiefdruckfarben vorzuschlagen, die eine Grundierschicht trägt, die während der Folienherstellung im Werk gefahrlos und leicht aufgebracht werden kann.

Die vorstehende Aufgabe wird durch eine orientierte Folie der eingangs genannten Gattung gelöst, deren kennzeichnende Merkmale darin zu sehen sind, daß die Grundierungsschicht im wesentlichen ein Salz enthält, ausgewählt aus der Gruppe

a) wasserlösliches Salz aus einer ungesättigten Fettsäure mit 10 bis 18 C-Atomen und einem Alkalimetall oder Mischungen solcher Salze,

b) wasserlösliches Salz aus einem Alkylsulfat mit 8 bis 18 C-Atomen und einem Alkalimetall oder Mischungen solcher Salze,

und daß die Grundierschicht in einer Menge vorliegt, daß die Haftung von Druckfarben auf der Folie verbessert wird.

Die Basisfolie aus orientiertem thermoplastischem Polyester besteht bevorzugt aus Polyethylenterephthalat, insbesondere aus biaxial orientiertem Polyethylenterephthalat. Die Erfindung läßt sich jedoch ebenso auf Folien auf Basis eines kristallisierbaren Polyesters aus der Polykondensation eines Glykols, z.B. Ethylenglykol oder Butandiol bzw. deren Gemische, mit Terephthalsäure oder Mischungen von Terephthalsäure und anderen Dicarbonsäuren, wie z.B. Isophthalsäure, Diphensäure und Sebacinsäure oder deren polyesterbildende Äquivalente, anwenden. Solche Polyester werden nach bekannten Verfahren hergestellt. Die Folie kann gleichfalls nach bekannten Verfahren und mit bekannten Vorrichtungen hergestellt werden.

Als Grundierschichten zur Verbesserung der Druckfarbenhaftung auf den beschriebenen Folien eignen sich wasserlösliche Alkalisalze von ungesättigten Fettsäuren mit etwa 10 bis 18 Kohlenstoffatomen. Bevorzugt wird Natriumoder Kaliumoleat verwendet. Es können aber auch die Natrium- oder Kaliumsalze von Palmitolein-, Ricinol- und Petroselinsäure mit Erfolg eingesetzt werden.

Weiterhin wirksam zur Verbesserung der Druckfarbenhaftung sind die wasserlöslichen Alkalisalze von Alkylsulfaten mit 8 bis 18 Kohlenstoffatomen. Dazu gehören Natrium- oder Kaliumtetradecylsulfat. Natrium- oder Kaliumlaurylsulfat, Natriumoder Kaliumoctylsulfat und Natrium- oder Kaliummyristylsulfat.

Unter dem Begriff "wasserlöslich" ist zu verstehen, daß die Salze in gewöhnlichem Leitungswasser bei Raumtemperatur in Konzentrationen von mindestens 0,4 g auf 100 ml Wasser, vorzugsweise in Konzentrationen von mehr als 2,0 g auf 100 cm$^3$ Wasser, löslich sein sollen.

Die als Grundierschichten verwendeten Salze müssen ferner bei Temperaturen über 200°C, so wie sie beim Trocknen und Hitzefixieren von z.B. orientierter Polyesterfolie vorkommen, wärmestabil sein. Natriumoleat (Natriumsalz der Ölsäure) und Natriumlaurylsulfat sind die erfindungsgemäß bevorzugten Vertreter wasserlöslicher Salze, da sie in hohem Maße wärmestabil, gut wasserlöslich und im Handel erhältlich sind.

Wie oben angegeben wird die erfindungsgemäße Grundierschicht als wäßrige Lösung mit einem Feststoffgehalt im Bereich von etwa 0,2 bis 15 Gew.-%, vorzugsweise von etwa 0,3 bis 6 Gew.-%, auf die Basisfolie aufgebracht. Der bevorzugte Feststoffanteil ist so bemessen, daß sich ein Trockenschichtgewicht von etwa 0,05 bis 100 mg/m$^2$ Folienoberfläche ergibt. Vorzugsweise bewegt sich das Trockenschichtgewicht im Bereich von etwa 1 bis 35 mg/m$^2$, wobei das angestrebte Gewicht 4 mg/m$^2$ beträgt.

Die erfindungsgemäße Beschichtung kann auf eine oder beide Seiten der Folie aufgetragen werden. Sie kann auch auf eine Folienseite aufgebracht werden, während sich auf der Gegenseite eine andere Beschichtung befindet, z.B. eine hitzehärtbare Acryl- oder Methacrylbeschichtung, wie in US-A-4 214 035 beschrieben. In einigen Fällen kann die Beschichtung auch auf eine bereits auf der Folienoberfläche vorhandene unterschiedliche Grundierschicht aufgebracht werden, auf der sie haftet, z.B. eine hitzehärtbare Acrylbeschichtung, gemäß US-A-3 819 773.

Die wäßrige Lösung enthält im wesentlichen die oben spezifizierten sauren Salze und hat keine weiteren Bestandteile, die ihre haftvermittelnden Eigenschaften beeinträchtigen würden, wie z.B. Stoffteilchen oder polymere Bestandteile, in denen das Salz in geringen Mengen als Emulgator oder Dispergiermittel anwesend sein könnte. Der Begriff "enthält im wesentlichen" soll jedoch nicht die Anwesenheit geringer Mengen an anderen wasserlöslichen Bestandteilen ausschließen, z.B. von wasserlöslichen Farbstoffen, pH-Regulatoren und dergleichen. Die wäßrige Lösung besteht vorzugsweise aus Wasser (demineralisiertes Wasser oder Leitungswasser) und zwischen 0,2 und 10 Gew.-% eines oder mehrerer der obengenannten sauren Salze. Die Grundierschicht befindet sich als unterbrechungsfreie Schicht auf der Folienoberfläche, wobei hier auch solche Fälle einbezogen sein sollen, in denen die Grundierschicht gegebenenfalls eine Vielzahl voneinander getrennter Bereiche oder Beschichtungsinseln bildet. In beiden Fällen wird eine wesentliche Verbesserung der Druckfarbenhaftung erzielt.

Die erfindungsgemäßen Grundierschichten haben eine ausgezeichnete Wärmestabilität, und aus diesem Grund können die bei der Produktion anfallenden Abfälle der beschichteten Folie, mit frischem Kunststoffmaterial vermischt, erneut geschmolzen und zur Herstellung von orientierter Folie wieder dem Extruder zugeführt werden. Bei einer so hergestellten Folie, die erhebliche Mengen an Regenerat aus beschichtetem Abfall enthält, erweisen sich Qualität, Farbe und Aussehen als gut bei sehr geringfügiger wahrnehmbarer Herabminderung der Eigenschaften aufgrund einer Verunreinigung durch die Beschichtung. Gegenüber vielen anderen beschichteten Folien, z.B. Folien mit einer Grundierschicht aus vinylidenchloridhaltigen Polymeren, gemäß US-A-2 627 088 und US-A-2 698 240, die zum Abbau und zur Verfärbung neigen, wenn sie wie oben beschrieben zurückgewonnen werden, bietet die erfindungsgemäße Folie mit Grundierschicht dem Folienhersteller also einen wirtschaftlichen Vorteil.

Bei der Folienherstellung wird nach dem Extrusionsverfahren gearbeitet. Zum Beispiel wird eine Polymerenschmelze als amorphe Folie auf eine polierte, rotierende Gießtrommel extrudiert, wo sich eine gegossene Folie aus dem Polymeren ausbildet. Anschließend wird die Folie axial gestreckt, und zwar bei einer monoaxial orientierten Folie lediglich in einer Richtung, d.h. entweder in Extrusionsrichtung (längs) oder senkrecht zur Extrusionsrichtung (quer), und bei einer biaxial orientierten Folie in zwei Richtungen, d.h. sowohl in Längs- als auch in Querrichtung. Der erste an der gegossenen Folie durchgeführte Streckschritt kann beliebig in einer der beiden rechtwinklig zueinander verlaufenden Richtungen erfolgen. Um der Folie Festigkeit und Zähigkeit zu verleihen, kann etwa um das 3,0- bis 5,0 fache der ursprünglichen Abmessungen der gegossenen Folie in einer oder beiden Richtungen gestreckt werden. Der Verstreckungsgrad liegt bei Polyesterfolien vorzugsweise etwa zwischen dem 3,2- bis 4,2 fachen der ursprünglichen Abmessungen.

Während der Streckschritte liegen die Temperaturen im Bereich zwischen der Glasübergangstemperatur des jeweils eingesetzten Polymeren bis unterhalb der Temperatur, bei der das Polymere weich wird und schmilzt.

Falls gewünscht, wird nach dem Strecken für die zur Kristallisation der Folie erforderliche Dauer wärmebehandelt. Durch die Kristallisation werden die mechanischen und thermischen Eigenschaften der Folie fixiert. Polyethylenterephthalat wird z.B. bei einer Temperatur im Bereich von etwa 170°C bis 240°C, vorzugsweise von etwa 200°C bis 235°C, wärmebehandelt.

Die Alkalisalz-Grundierschicht in Form einer wäßrigen Lösung kann während einer der drei folgenden Stufen der Folienherstellung in-line aufgebracht werden: der dem Strecken vorausgehenden Stufe, d.h. zwischen dem Gießen der amorphen Folie und dem ersten Streckschritt, wie es z.B. in GB-PS 1 411 564 beschrieben ist, oder der Streckzwischenstufe, d.h. nach dem uniaxialen, aber vor dem biaxialen Strecken, z.B. gemäß US-A-4 214 035, oder der Stufe nach dem Strecken, d.h. im Anschluß an das biaxiale Strecken, vor dem Aufwickeln der Folie. Normalerweise ist die Wärme, mit der die Folie beim Strecken oder den abschließenden Konditionierstufen beaufschlagt wird, ausreichend, um Wasser und andere flüchtige Bestandteile zu vertreiben und die Grundierbeschichtung zu trocknen. Sollte die Beschichtung allerdings nach den Heizphasen aufgebracht werden, wäre eine gesonderte Trockenstufe erforderlich.

In einer bevorzugten Ausführung wird die Grundierschicht nach dem uniaxialen Strecken, d.h. nach dem Strecken der Folie in einer Richtung, jedoch vor dem Strecken in der rechtwinklig dazu verlaufenden Richtung, aufgebracht. In einer weiteren bevorzugten Ausführung wird die Folie vor dem Beschichten zunächst in Längsrichtung gestreckt. Dabei wird die Folie nach dem Längsstrecken nach einem der bekannten Verfahren beschichtet. Das Beschichten kann zum Beispiel mit Walzen, durch Aufsprühen, mit Schlitzdüsen oder durch Tauchen erfolgen. In einer bevorzugten Ausführung wird die Folie mit Gravurwalzen beschichtet. Die uniaxial gestreckte Folie kann ferner vor dem Beschichten in bekannter Weise mit einem Corona-Entladegerät coronabehandelt werden. Die Coronabehandlung vermindert die Hydrophobie der Folienoberfläche, wodurch die wäßrige Beschichtung die Oberfläche leichter benetzen kann und somit die Haftung der Beschichtung an der Oberfläche verbessert wird.

Die fertige grundierbeschichtete Folie zeigt beim späteren Bedrucken ein ausgezeichnetes Haftvermögen gegenüber vielen Druckfarben auf wäßriger Basis oder auf Basis von organischen Lösemitteln.

Die erfindungsgemäße Folie mit Grundierschicht wird hauptsächlich als Verpackungs- oder Etikettierungsmaterial verwendet. Im Vergleich zu unbeschichteten Folien zeigen die mit einer Grundierschicht versehenen Folien eine verbesserte Haftung gegenüber Flexodruck- und Tiefdruckfarben auf Basis von Wasser und organischen Lösemitteln. Solche Druckfarben können aus Farbstoffen, gegebenenfalls in Verbindung mit löslichen Harzen und Eindickungsmitteln, bestehen, die in einem wäßrig-alkoholischen Medium oder in einem organischen Lösemittel dispergiert oder gelöst sind.

Die folgenden Beispiele sollen die Erfindung näher erläutern.

Beispiel 1

Eine Schmelze aus Polyethylenterephthalatpolymerem wurde durch eine Breitschlitzdüse auf eine Gießtrommel extrudiert, die auf einer Temperatur von ca. 20°C gehalten wurde. Die Schmelze erstarrte zu einer gegossenen Folie. Die gegossene Folie wurde im Streckverhältnis von etwa 3,5 : 1 längsgestreckt, wobei ihre Temperatur auf etwa 80°C gehalten wurde.

Die längsgestreckte Folie wurde mit einem Corona-Entladegerät coronabehandelt und anschließend durch Umkehrgravurbeschichtung (reverse gravure coating) mit einer wäßrigen Lösung beschichtet, die 4 Gew.-% Natriumlaurylsulfat gelöst enthielt.

Die längsgestreckte, coronabehandelte und beschichtete Folie wurde bei einer Temperatur von etwa 100°C getrocknet. Sie wurde dann im Streckverhältnis von 3,9 : 1 in Querrichtung zu einer biaxial orientierten Folie verarbeitet. Die biaxial gestreckte Folie wurde bei einer Höchsttemperatur von 230°C hitzefixiert. Das Trockengewicht der Beschichtung betrug etwa 34 mg/m² Folienoberfläche. Die Basisfolie aus Polyethylenterephthalat hatte eine Dicke von etwa 12,2 µm.

Beispiel 2

Beispiel 1 wurde genau wie beschrieben wiederholt, mit der Ausnahme, daß die Beschichtungszusammensetzung aus einer wäßrigen Lösung mit einem Gehalt von 4 Gew.-% gelöstem Natriumoleat bestand. Das Trockengewicht der Beschichtung betrug etwa 36,5 mg/m² Folienoberfläche.

Beispiel 3

Beispiel 2 wurde genau wie beschrieben wiederholt, wobei allerdings die Beschichtungszusammensetzung aus einer wäßrigen Lösung mit einem Gehalt von 0,46 Gew.-% gelöstem Natriumoleat bestand. Das Trockengewicht der Beschichtung betrug etwa 4,15 mg/m² Folienoberfläche.

An jeder der mit einer Grundierschicht versehenen Folien aus den Beispielen 1 bis 3 wurde die Druckfarbenhaftung mit fünf verschiedenen im Handel erhältlichen Druckfarben auf Basis von Wasser bzw. Lösemittel bewertet. Die Versuche wurden so durchgeführt, daß die Druckfarben nach einem Aufstreichverfahren mit einem Spiralschaber (Mayer Rod Nr. 6®) auf Abschnitte der Folienproben aufgetragen und anschließend mindestens 1 Minute bei 60°C im Ofen getrocknet wurden. Ein Stück Klebeband (Scotch Brand No. 610®) wurde auf die getrocknete eingefärbte Oberfläche aufgedrückt, mit dem Finger fest angerieben und dann rasch von der Folie abgezogen. Die in dem Bereich unter dem Klebeband zurückbleibende Menge an Druckfarbe wurde dann als Prozentanteil dieses Bereichs ausgedrückt, d.h. keine Druckfarbe entfernt =100% Haftung, sämtliche Druckfarbe entfernt = 0% Haftung. Die dazwischenliegenden Haftungswerte wurden als die jeweils auf der Folie zurückbleibende Menge an Druckfarbe ermittelt.

4

Die zur Beurteilung verwendeten fünf im Handel erhältlichen Druckfarben waren: A) Inmont Aquabond "S" Weiß® von der Inmont Corp., Charlotte, N. C.; B) Bemis Water Laminating FS Gelb®; C) Bemis Solvent Opaque Weiß®; beide Druckfarben zu beziehen von Bemis Corp., Indianapolis, Ind.; D) AMS Nr. 245 Solvent Black®, Hersteller Patterson Stamp Works Division der American Marking Systems, Clifton, N. J.; und E) CPI R-1094 Water Red®, Hersteller Custom Printing Inks, Ltd., San Diego, Cal.

Die Haftungsversuche mit den beschichteten Folien aus Beispielen 1 bis 3 und einer unbeschichteten Polyethylenterephthalatfolie als Vergleichsprobe hatten die folgenden Ergebnisse:

Tabelle

| Druckfarbe | Vergleichs-probe | Beispiel 1 | Beispiel 2 | Beispiel 3 |
|---|---|---|---|---|
| A | 13% | 95% | 97% | 99% |
| B | 20% | 80% | 25% | 25% |
| C | 30% | 20% | 73% | 90% |
| D | 3% | 30% | 100% | 100% |
| E | 10% | 70% | 60% | 40% |

Aus der obigen Tabelle ist ersichtlich, daß Folie mit einer Grundierschicht aus Natriumlaurylsulfat eine verbesserte Haftung gegenüber Druckfarben auf wäßriger Basis aufwies, wogegen Folie mit einer Grundierschicht aus Natriumoleat im allgemeinen eine bessere Haftung gegenüber Druckfarben auf Basis von organischen Lösemitteln zeigte.

**Patentansprüche**

1. Orientierte, selbsttragende Folie aus thermoplastischem Polyester, die auf mindestens einer Seite eine durchgehende Grundierungsschicht trägt, dadurch gekennzeichnet, daß die Grundierungsschicht im wesentlichen ein Salz enthält, ausgewählt aus der Gruppe

a) wasserlösliches Salz aus einer ungesättigten Fettsäure mit 10 bis 18 C-Atomen und einem Alkalimetall oder Mischungen solcher Salze,

b) wasserlösliches Salz aus einem Alkylsulfat mit 8 bis 18 C-Atomen und einem Alkalimetall oder Mischungen solcher Salze,

und daß die Grundierschicht in einer Menge vorliegt, daß die Haftung von Druckfarben auf der Folie verbessert wird.

2. Folie nach Anspruch 1, dadurch gekennzeichnet, daß die orientierte Folie aus thermoplastischem Polyester eine biaxial orientierte Polyethylenterephthalatfolie ist.

3. Folie nach Anspruch 1 oder 2, dadurch gekennzeichnet, daß die Grundierschicht in einer Menge vorliegt, die einem Trockengewicht im Bereich von 0,05 bis 100 mg/m² entspricht, bevorzugt von 1 bis 35 mg/m².

4. Folie nach einem der Ansprüche 1 bis 3, dadurch gekennzeichnet, daß die Grundierschicht ein Alkalisalz der Ölsäure, insbesondere Natriumsalz der Ölsäure, enthält.

5. Folie nach einem der Ansprüche 1 bis 3, dadurch gekennzeichnet, daß die Grundierschicht ein Alkalisalz von Laurylsulfat, insbesondere Natriumlaurylsulfat, enthält.

6. Verfahren zur Herstellung einer Folie nach einem der Ansprüche 1 bis 5, bei dem zunächst durch Schmelzextrusion eine im wesentlichen amorphe Polyesterfolie hergestellt wird, anschließend durch Streckung in eine oder zwei Richtungen orientiert, danach hitzefixiert und aufgewickelt wird, dadurch gekennzeichnet, daß die Grundierschicht als wäßrige Lösung auf die Folie aufgebracht wird und daß die Grundierschicht vor den Streckschritten, zwischen den Streckschritten oder nach den Streckschritten, aber vor dem Aufwickeln aufgebracht wird.

7. Verfahren nach Anspruch 6, dadurch gekennzeichnet, daß die Grundierschicht zwischen den Streckschritten aufgebracht wird.

8. Verfahren nach Anspruch 6 oder 7, dadurch gekennzeichnet, daß die Grundierschicht als wäßrige Lösung einer Konzentration zwischen 0,2 und 15 Gew.-%, vorzugsweise zwischen 0,3 und 6 Gew.-%, auf die Folie aufgebracht wird.

9. Verfahren nach einem der Ansprüche 6 bis 8, dadurch gekennzeichnet, daß die Folie vor dem Auftragen der Grundierschicht einer Coronabehandlung ausgesetzt wird.

10. Folie nach einem der Ansprüche 1 bis 5, hergestellt nach dem Verfahren der Ansprüche 6 bis 9, dadurch gekennzeichnet, daß direkt auf der Grundierschicht Druckfarbe aufgebracht ist.

# EP 0 134 463 B1

## Revendications

1. Pellicule autoporteuse orientée, à base de polyester thermoplastique, comportant sur au moins un côté une couche d'accrochage continue, caractérisée en ce que la couche d'accrochage contient essentiellement un sel choisi parmi

a) un sel hydrosoluble d'un acide gras insaturé ayant de 10 à 18 atomes de carbone et d'un métal alcalin, ou des mélanges de sels de ce type,

b) un sel hydrosoluble d'un alkylsulfate ayant de 8 à 18 atomes de carbone et d'un métal alcalin, ou des mélanges de sels de ce type,

et en ce que la couche d'accrochage se trouve en une quantité telle que l'adhérence d'encres d'imprimerie à la pellicule est améliorée.

2. Pellicule selon la revendication 1, caractérisée en ce que la pellicule orientée, à base de polyester thermoplastique, est une pellicule de poly(téréphtalate d'éthylène) orientée biaxialement.

3. Pellicule selon la revendication 1 ou 2, caractérisée en ce que la couche d'accrochage se trouve en une quantité qui correspond à un poids de couche sèche dans la plage de 0,05 à 100 mg/m$^2$, de préférence de 1 à 35 mg/m$^2$.

4. Pellicule selon l'une des revendications 1 à 3, caractérisée en ce que la couche d'accrochage contient un sel alcalin de l'acide oléique, en particulier le sel de sodium de l'acide oléique.

5. Pellicule selon l'une des revendications 1 à 3, caractérisée en ce que la couche d'accrochage contient un laurylsulfate alcalin, en particulier le laurylsulfate de sodium.

6. Procédé pour la fabrication d'une pellicule selon l'une des revendications 1 à 5, dans lequel on prépare d'abord par extrusion de masse fondue une feuille de polyester essentiellement amorphe, ensuite on l'oriente par étirage dans une ou deux directions, puis on la soumet à un thermofixage et on l'enroule, caractérisé en ce que la couche d'accrochage est appliquée sous forme de solution aqueuse sur la pellicule, et en ce que la couche d'accrochage est appliquée avant les étapes d'étirage, entre les étapes d'étirage ou après les étapes d'étirage, mais avant l'enroulement.

7. Procédé selon la revendication 6, caractérisé en ce que la couche d'accrochage est appliquée entre les étapes d'étirage.

8. Procédé selon la revendication 6 ou 7, caractérisé en ce que la couche d'accrochage est appliquée sur la feuille sous forme d'une solution aqueuse ayant une concentration comprise entre 0,2 et 15% en poids, de préférence entre 0,3 et 6% en poids.

9. Procédé selon l'une des revendications 6 à 8, caractérisé en ce que, avant l'application de la couche d'accrochage, la pellicule est soumise à un traitement par effet couronne.

10. Pellicule selon l'une des revendications 1 à 5, fabriquée selon le procédé des revendications 6 à 9, caractérisée en ce que de l'encre d'imprimerie est appliquée directement sur la couche d'accrochage.

## Claims

1. Oriented, self-supporting film of a thermoplastic polyester, having a continuous primer coating on at least one side thereof, wherein the primer coating contains essentially a salt selected from the group consisting of

a) a water-soluble salt of an unsaturated fatty acid having from 10 to 18 carbon atoms and an alkali metal and mixtures of such salts,

b) a water-soluble salt of an alkyl sulfate having from 8 to 18 carbon atoms and an alkali metal and mixtures of such salts,

and wherein the primer coating is present in a quantity effective to improve the adhesion of printing inks to the film.

2. A film as claimed in claim 1, wherein the oriented film of a thermoplastic polyester is a biaxially oriented polyethylene terephthalate film.

3. A film as claimed in claim 1 or 2, wherein the primer coating is present in a quantity which corresponds to a dry weight in the range from 0.05 to 100 mg/m$^2$, preferably from 1 to 35 mg/m$^2$.

4. A film as claimed in any of claims 1 to 3, wherein the primer coating contains an alkali metal salt of oleic acid, in particular the sodium salt of oleic acid.

5. A film as claimed in any of claims 1 to 3, wherein the primer coating contains an alkali metal salt of lauryl sulfate, in particular sodium lauryl sulfate.

6. Process for manufacturing a film as claimed in any of claims 1 to 5, the process comprising first producing an essentially amorphous polyester sheet by melt extrusion, then orienting the sheet by stretching in one or two directions, thereafter heat-setting and winding the film, wherein the primer coating is applied to the film as an aqueous solution and wherein the primer coating is applied prior to the stretching steps, between the stretching steps or following the stretching steps, but prior to winding the film.

7. A process as claimed in claim 6, wherein the primer coating is applied between the stretching steps.

8. A process as claimed in claim 6 or 7, wherein the primer coating is applied to the film as an aqueous solution having a concentration between 0.2 and 15% by weight, preferably between 0.3 and 6% by weight.

9. A process as claimed in any of claims 6 to 8, wherein, prior to the application of the primer coating, the film is subjected to a corona treatment.

10. A film as claimed in any of claims 1 to 5, manufactured according to the process of claims 6 to 9, wherein printing ink is applied directly to the primer coating.